# EUROPÄISCHE PATENTSCHRIFT

(11) **EP 2 334 957 B1**
(45) Veröffentlichungstag und Bekanntmachung des Hinweises auf die Patenterteilung: **10.10.2012**
(21) Anmeldenummer: 09781749.8
(22) Anmeldetag: 12.08.2009
(51) Int. Cl.: F16H 63/30, F16H 63/32

(54) **SCHALTANORDNUNG FÜR EIN SCHALTGETRIEBE**
SHIFT ARRANGEMENT FOR A MANUAL TRANSMISSION
DISPOSITIF DE COMMUTATION POUR UNE BOÎTE DE VITESSES

(30) Priorität: 30.09.2008 DE 102008049796
(43) Veröffentlichungstag der Anmeldung: 22.06.2011
(73) Patentinhaber: Schaeffler Technologies AG & Co. KG, 91074 Herzogenaurach (DE)
(72) Erfinder: FEUERBACH, Matthias, 97070 Würzburg (DE); KRÄMER, Klaus, 91460 Baudenbach (DE); SCHWARZ, Uwe, 91052 Erlangen (DE)
(86) Internationale Anmeldenummer: PCT/EP2009/060436
(87) Internationale Veröffentlichungsnummer: WO 2010/037589

(56) Entgegenhaltungen:
- EP-A- 1 637 779
- EP-A- 1 950 470
- DE-A1-102004 002 805
- DE-U1-202005 014 599

## Beschreibung

### Gebiet der Erfindung

Die Erfindung betrifft eine Schaltanordnung für ein Schaltgetriebe, die mindestens eine verschiebbar angeordnete Schaltschiene umfasst, die in zwei in Verschieberichtung beabstandeten Lagerstellen gelagert ist, wobei die beiden Lagerstellen senkrecht zur Verschieberichtung einen Versatz aufweisen.

### Hintergrund der Erfindung

In manchen Ausführungsformen von Schaltgetrieben werden Schaltschienen eingesetzt, die aufgrund der Bauraumverhältnisse nicht durch zwei fluchtende Lager gelagert werden können, sondern die in zwei Lagerstellen gelagert sind, die einen Versatz senkrecht zur Verschieberichtung aufweisen.

Eine Schaltanordnung dieser Art ist beispielsweise aus der DE 10 2004 002 805 B4 bekannt. Hier wird ein Fahrzeugschaltgetriebe beschrieben, bei dem zum Schalten axial verschiebliche Schaltschienen vorgesehen sind mit zwei endseitig gemeinsam in einer runden Lagerausnehmung geführten, axial verschiebbar nebeneinander angeordneten Schaltschienen, auf denen jeweils am Ende eine im Querschnitt halbkreisförmige Lagerhülse angeordnet ist. Zwei zusammenwirkende halbkreisförmige Lagerhülsen haben jeweils abgeflachte Seiten, an denen sie aneinander liegen, so dass diese Seiten beim Verschieben einer Schaltschiene aneinander gleiten. Mithin liegt relativ zur runden Lagerausnehmung für die Schaltschiene ein Versatz in Richtung quer zur Verschieberichtung vor.

Nachteilig ist, dass für die Herstellung der beiden komplementären, im Querschnitt halbkreisförmigen Lagerhülsen ein relativ hoher fertigungstechnischer Aufwand getrieben werden muss.

EP 1 950 470 A2 zeigt eine Schaltanordnung nach dem Oberbegriff des Anspruchs 1. Die Schaltschiene ist gekröpft, so dass deren Lagerstellen versetzt zueinander angeordnet sind. Nachteilig an einer derartigen Schaltvorrichtung ist, dass die Schaltschiene relativ dick ausgebildet sein muss, um insbesondere im Bereich ihrer Kröpfung eine hinreichende Steifigkeit zu gewährleisten.

### Aufgabe der Erfindung

Der vorliegenden Erfindung liegt daher die Aufgabe zugrunde, eine Schaltanordnung für ein Schaltgetriebe gemäß der eingangs genannten Art vorzuschlagen, die in einfacherer und damit kostengünstigerer Weise den benötigten Querversatz der beiden Lagerstellen bei hinreichender Steifigkeit realisiert.

### Zusammenfassung der Erfindung

Die Aufgabe wird durch eine Schaltanordnung nach Anspruch 1 gelöst. Der Ausleger erstreckt sich über mindestens 33 %, vorzugsweise über mindestens 50 %, der Länge der Schaltschiene in Verschieberichtung.

Die Schaltschiene und der Ausleger können dabei miteinander verschweißt sein.

Es ist auch möglich, dass die Schaltschiene und der Ausleger jeweils mindestens eine komplementäre Ausformung aufweisen, mit der ein formschlüssiger Verbund zwischen der Schaltschiene und dem Ausleger herstellbar ist. Die komplementäre Ausformung kann mindestens einen Fortsatz in einem der Teile Schaltschiene oder Ausleger und mindestens einen komplementären Durchbruch in dem anderen Teil umfassen.

Die Schaltschiene und/oder der Ausleger können eine im Querschnitt rechteckige Form aufweisen. Sie können aus einem Blech durch einen einfachen Fertigungsprozess (z. B. Stanzen oder Laserstrahlschneiden) hergestellt werden.

Der Ausleger umfasst bevorzugt mindestens ein Funktionselement. Bei diesem kann es sich beispielsweise um eine Aussparung zum Eingriff eines weiteren Bauteils der Schaltanordnung handeln. Speziell ist vorgesehen, dass das Funktionselement ein Schaltmaul ist.

Das Funktionselement kann auch eine Aussparung für eine Verriegelung sein.

An der Schaltschiene ist zumeist eine Schaltgabel befestigt.

Die Lagerstellen sind bevorzugt mit je einem zylindrischen Zapfen versehen. Dieser kann aus Kunststoff bestehen.

Der Versatz der beiden Lagerstellen wird erfindungsgemäß also durch einen Ausleger realisiert, der mit der Schaltschiene in geeigneter Weise verbunden ist, wofür eine stoffschlüssige oder formschlüssige Verbindung bevorzugt ist (z. B. Verschweißen oder Vertaumeln).

In den Ausleger können zusätzlich Funktionen wie z. B. ein Eingriffsbereich für die Verriegelung, integriert werden. Der Ausleger kann auch als Schaltmaul und/oder als Versteifung der Schaltschiene genutzt werden.

Die vorgeschlagene Schaltschiene mit den beiden quer zur Verschieberichtung versetzt angeordneten Lagerstellen lässt sich fertigungstechnisch einfach herstellen, was es ermöglicht, die Anordnung kostengünstig zu realisieren.

Es wird damit in einfacher Weise möglich, im Getriebebereich eine Schaltgabel zur Verfügung zu stellen, die in zueinander versetzt angeordneten Lagerstellen verschieblich angeordnet ist. Wenn der Bauraum im Getriebe keine fluchtenden Lagerstellen erlaubt, kann demgemäß die vorgeschlagene Konzeption eine preisgünstige Lösung liefern.

### Kurze Beschreibung der Figuren

In den Zeichnungen sind Ausführungsbeispiele der Erfindung dargestellt. Es zeigen:
- Fig. 1: in perspektivischer Darstellung eine nicht erfindungsgemäße Schaltschiene als Bestandteil einer Schaltanordnung für ein Schaltgetriebe und
- Fig. 2: eine erfindungsgemäße Ausführungsform der Schaltschiene.

### Ausführliche Beschreibung der Figuren

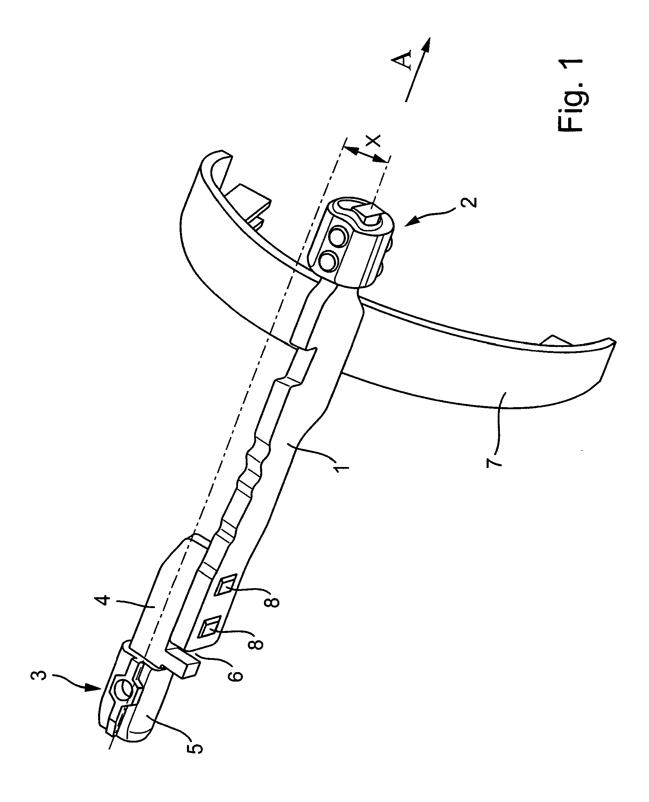

In Fig. 1 ist eine Schaltschiene 1 als Bestandteil einer Schaltanordnung eines Schaltgetriebes zu sehen. An der Schaltschiene 1 ist eine Schaltgabel 7 befestigt, nämlich angeschweißt. Die Schaltgabel 7 greift in bekannter Weise in die Ringnut einer Schaltmuffe (nicht dargestellt) ein und bewegt diese axial. Demgemäß ist die Schaltschiene 1 in eine Verschieberichtung A zu bewegen. Die Lagerung der Schaltschiene 1 erfolgt dabei in zwei Lagerstellen 2 und 3. Von den jeweiligen Lagern 2, 3 ist nur jeweils ein zylindrischer Lagerzapfen dargestellt, der in einer entsprechenden Lagerhülse mit einer zylindrischen Bohrung angeordnet ist.

Die Bauraumverhältnisse in dem Schaltgetriebe, in dem die dargestellte Anordnung einzubauen ist, erlaubt es nicht, dass die beiden Lagerstellen 2, 3 fluchtend angeordnet sind. Vielmehr ist ein Versatz x senkrecht zur Verschieberichtung A, also quer zu dieser nötig. Demgemäß sind die beiden Lagerzapfen seitlich versetzt zueinander an der Schaltschiene angeordnet.

Realisiert wird dies wie folgt: An der Schaltschiene 1 ist ein Ausleger 4 seitlich angeordnet. Es handelt sich dabei vorliegend um ein ebenes Blechteil, das durch Stanzen oder durch Laserschneiden aus einer Blechtafel hergestellt sein kann. Der Ausleger 4 ist im Ausführungsbeispiel nach Fig. 1 durch eine formschlüssige Verbindung mit der Schaltschiene 1 verbunden. Hierzu weist die Schaltschiene 1 zwei Durchbrüche auf, in die Fortsätze 8 des Auslegers hindurchtreten, die nach Art eines Niets endseitig verformt sind, so dass eine feste Verbindung zwischen der Schaltschiene 1 und dem Ausleger 4 gegeben ist. Am Ausleger 4 wiederum ist ein Teil 5 der einen Lagerstelle 3 angeordnet, nämlich der Lagerzapfen. Aufgrund der gegebenen Geometrie ergibt sich also der benötigte seitliche Versatz x.

Die Ausformung des Auslegers 4 bzw. der Schaltschiene 1 ist dabei so gewählt, dass sich eine Aussparung 6 ergibt, die ein Funktionselement darstellt, vorliegend die Aussparung für eine Verriegelung.

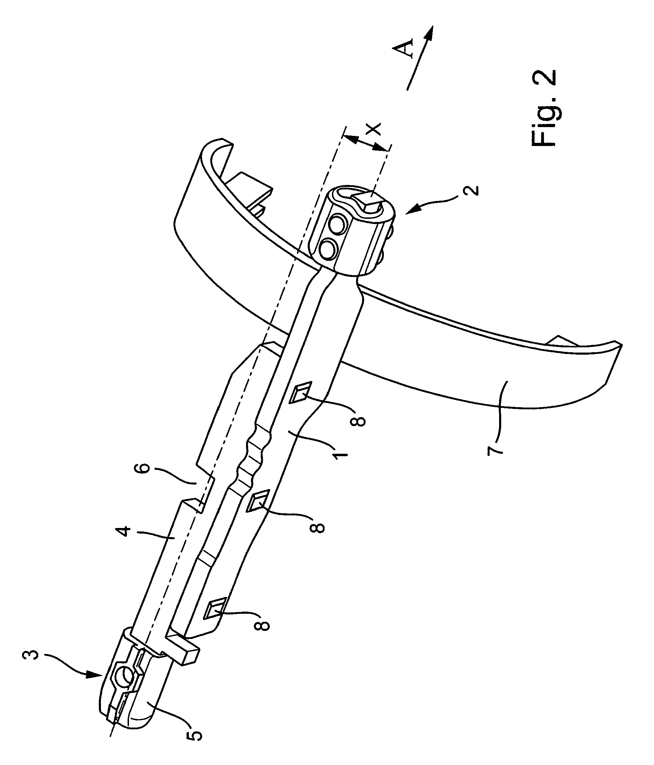

Die Lösung gemäß Fig. 2 ist derjenigen gemäß Fig. 1 ähnlich. Hier ist der Ausleger 4 länger ausgebildet und mit drei Fortsätzen 8 ausgeführt, die durch drei Ausnehmungen in der Schaltschiene 1 hindurchtreten und endseitig verformt (vertaumelt) sind, so dass die Teile 1 und 4 fest miteinander verbunden sind.

Durch die hier sehr lange Ausführung des Auslegers wird eine erhebliche Versteifung bzw. Verstärkung der Schaltschiene 1 durch den Ausleger 4 erreicht, so dass mit relativ dünnen und damit leichten Blechen gearbeitet werden kann, aus denen die Teile 1 und 4 bestehen.

In Fig. 2 ist als Funktionselement 6 eine Ausnehmung vorgesehen, die ein Schaltmaul zur Betätigung der Schaltschiene 1 darstellt.

### Bezugszeichenliste

- 1: Schaltschiene
- 2: Lagerstelle
- 3: Lagerstelle
- 4: Ausleger
- 5: Teil der Lagerstelle
- 6: Funktionselement
- 7: Schaltgabel
- 8: Fortsatz

- A: Verschieberichtung
- x: Versatz

## Patentansprüche

1. Schaltanordnung für ein Schaltgetriebe, die mindestens eine verschiebbar angeordnete Schaltschiene (1) umfasst, die in zwei in Verschieberichtung (A) beabstandeten Lagern (2, 3) gelagert ist, wobei die beiden Lager (2, 3) senkrecht zur Verschieberichtung (A) einen Versatz (x) aufweisen, wobei zur Herstellung des Versatzes (x) an der Schaltschiene (1) seitlich ein Ausleger (4) befestigt ist, der einen Teil (5) eines der beiden Lager (3) trägt, **dadurch gekennzeichnet, dass** sich der Ausleger (4) über mindestens 33 % der Länge der Schaltschiene (1) in Verschieberichtung (A) erstreckt.

2. Schaltanordnung nach Anspruch 1, **dadurch gekennzeichnet, dass** die Schaltschiene (1) und der Ausleger (4) miteinander verschweißt sind.

3. Schaltanordnung nach Anspruch 1, **dadurch gekennzeichnet, dass** die Schaltschiene (1) und der Ausleger (4) jeweils mindestens eine komplementäre Ausformung aufweisen, mit der ein formschlüssiger Verbund zwischen der Schaltschiene (1) und dem Ausleger (4) herstellbar ist.

4. Schaltanordnung nach Anspruch 3, **dadurch gekennzeichnet, dass** die komplementäre Ausformung mindestens einen Fortsatz in einem der Teile Schaltschiene (1) oder Ausleger (4) und mindestens einen komplementären Durchbruch in dem anderen Teil umfasst.

5. Schaltanordnung nach Anspruch 1, **dadurch gekennzeichnet, dass** die Schaltschiene (1) und/oder der Ausleger (4) eine im Querschnitt rechteckige Form aufweisen.

6. Schaltanordnung nach Anspruch 1, **dadurch gekennzeichnet, dass** der Ausleger (4) eine Aussparung zum Eingriff eines weiteren Bauteils der Schaltanordnung aufweist.

7. Schaltanordnung nach Anspruch 6, **dadurch gekennzeichnet, dass** die Aussparung ein Schaltmaul ist.

8. Schaltanordnung nach Anspruch 6, **dadurch gekennzeichnet, dass** die Aussparung für eine Verriegelung vorgesehen ist.

9. Schaltanordnung nach Anspruch 1, **dadurch gekennzeichnet, dass** an der Schaltschiene (1) eine Schaltgabel (7) befestigt ist.

10. Schaltanordnung nach Anspruch 1, **dadurch gekennzeichnet, dass** sich der Ausleger (4) über mindestens 50 % der Länge der Schaltschiene (1) in Verschieberichtung (A) erstreckt.

11. Schaltanordnung nach Anspruch 1, **dadurch gekennzeichnet, dass** die Lager (2, 3) je einen zylindrischen Zapfen (5) aufweisen.

12. Schaltanordnung nach Anspruch 11, **dadurch gekennzeichnet, dass** der zylindrische Zapfen (5) aus Kunststoff besteht.

## Claims

1. Shift arrangement for a manual transmission, the shift arrangement comprising at least one displaceably arranged shift rail (1) which is mounted in two bearings (2, 3) which are spaced apart in the displacement direction (A), wherein the two bearings (2, 3) have an offset (x) perpendicular to the displacement direction (A), wherein to produce the offset (x), a flange (4) is fastened laterally to the shift rail (1), which flange bears a part (5) of one of the two bearings (3), **characterized in that** the flange (4) extends over at least 33% of the length of the shift rail (1) in the displacement direction (A).

2. Shift arrangement according to Claim 1, **characterized in that** the shift rail (1) and the flange (4) are welded to one another.

3. Shift arrangement according to Claim 1, **characterized in that** the shift rail (1) and the flange (4) each have at least one complementary formation by means of which a form-fitting connection can be produced between the shift rail (1) and the flange (4).

4. Shift arrangement according to Claim 3, **characterized in that** the complementary formation comprises at least one projection on one of the parts shift rail (1) or flange (4) and at least one complementary aperture tin the other part.

5. Shift arrangement according to Claim 1, **characterized in that** the shift rail (1) and/or the flange (4) have a rectangular shape in cross section.

6. Shift arrangement according to Claim 1, **characterized in that** the flange (4) has a cutout for the engagement of a further component of the shift arrangement.

7. Shift arrangement according to Claim 6, **characterized in that** the cutout is a shift mouth.

8. Shift arrangement according to Claim 6, **characterized in that** the cutout is provided for a locking means.

9. Shift arrangement according to Claim 1, **characterized in that** a shift fork (7) is fastened to the shift rail (1).

10. Shift arrangement according to Claim 1, **characterized in that** the flange (4) extends over at least 50% of the length of the shift rail (1) in the displacement direction (A).

11. Shift arrangement according to Claim 1, **characterized in that** the bearings (2, 3) each have a cylindrical journal (5).

12. Shift arrangement according to Claim 11, **characterized in that** the cylindrical journal (5) is composed of plastic.

## Revendications

1. Dispositif de changement de vitesses pour une boite de vitesses, qui comprend au moins une tringle de changement de vitesses (1) disposée de manière déplaçable, qui est montée dans deux paliers (2, 3) espacés dans la direction de déplacement (A), les deux paliers (2, 3) présentant, perpendiculairement à la direction de déplacement (A) un décalage (x), un bras (4) étant fixé latéralement sur la tringle de changement de vitesses (1) en vue de créer le décalage (x), lequel bras porte une partie (5) de l'un des deux paliers (3), **caractérisé en ce que** le bras (4) s'étend sur au moins 33 % de la longueur de la tringle de changement de vitesses (1) dans la direction de déplacement (A).

2. Dispositif de changement de vitesses selon la revendication 1, **caractérisé en ce que** la tringle de changement de vitesses (1) et le bras (4) sont soudés l'un à l'autre.

3. Dispositif de changement de vitesses selon la revendication 1, **caractérisé en ce que** la tringle de changement de vitesses (1) et le bras (4) présentent à chaque fois au moins une formation complémentaire avec laquelle un assemblage par coopération de forme peut être créé entre la tringle de changement de vitesses (1) et le bras (4).

4. Dispositif de changement de vitesses selon la revendication 3, **caractérisé en ce que** la formation complémentaire comprend au moins une saillie dans l'une des parties constituées par la tringle de changement de vitesse (1) et le bras (4), et au moins un orifice complémentaire dans l'autre partie.

5. Dispositif de changement de vitesses selon la revendication 1, **caractérisé en ce que** la tringle de changement de vitesses (1) et/ou le bras (4) présentent une forme rectangulaire en section transversale.

6. Dispositif de changement de vitesses selon la revendication 1, **caractérisé en ce que** le bras (4) présente un évidement pour l'engagement avec un composant supplémentaire du dispositif de changement de vitesses.

7. Dispositif de changement de vitesses selon la revendication 6, **caractérisé en ce que** l'évidement est une griffe de changement de vitesses.

8. Dispositif de changement de vitesses selon la revendication 6, **caractérisé en ce que** l'évidement est prévu pour un verrouillage.

9. Dispositif de changement de vitesses selon la revendication 1, **caractérisé en ce qu'**une fourchette de changement de vitesses (7) est fixée sur la tringle de changement de vitesses (1).

10. Dispositif de changement de vitesses selon la revendication 1, **caractérisé en ce que** le bras (4) s'étend sur au moins 50 % de la longueur de la tringle de changement de vitesses (1) dans la direction de déplacement (A).

11. Dispositif de changement de vitesses selon la revendication 1, **caractérisé en ce que** les paliers (2, 3) présentent un tourillon cylindrique (5).

12. Dispositif de changement de vitesses selon la revendication 11, **caractérisé en ce que** le tourillon cylindrique (5) se compose de plastique.
